# EUROPEAN PATENT SPECIFICATION

(11) **EP 3 267 172 B1**
(45) Date of publication and mention of the grant of the patent: **06.03.2024**
(21) Application number: 16001507.9
(22) Date of filing: 05.07.2016
(51) Int. Cl.: G01M 1/02, G01B 11/275, G01M 17/013, G01M 17/02

(54) **MACHINE BODY FOR A WHEEL SERVICING APPARATUS WITH DISPLAY SUPPORT UNIT**
MASCHINENKÖRPER FÜR EINE RADWARTUNGSVORRICHTUNG MIT ANZEIGEHALTERUNGSEINHEIT
CORPS DE MACHINE POUR UN APPAREIL D'ENTRETIEN DE ROUE AVEC UNITÉ DE SUPPORT D'AFFICHAGE

(43) Date of publication of application: 10.01.2018
(73) Proprietor: Snap-on Equipment Srl a unico socio, 42015 Correggio (RE) (IT)
(72) Inventor: Sotgiu, Paolo, 41125 Modena (IT)
(74) Representative: Eisenführ Speiser

(56) References cited:
- DE-A1-102008 015 275
- US-A1- 2003 187 556
- US-A1- 2014 236 416
- US-B1- 6 170 406
- US-B2- 7 069 660

## Description

### FIELD OF INVENTION

The present invention relates to a wheel servicing apparatus, in particular to a wheel balancing apparatus, wherein the wheel servicing apparatus has a machine body that comprises a display support unit supporting a display unit attached thereto.

### BACKGROUND OF THE INVENTION

Vehicle wheels are generally made up of a cylindrical metal rim having, at the axial extremities, annual rim flanges between which a slot-in fitting channel or rim well, respectively for an elastic tyre is defined. The side portions of the elastic tyre, the so-called "beads", are blocked up firmly against the annular rim flanges. Irregularities in the rim and/or tire, e.g. small bumps or protrusions which may occur during manufacture or during driving of a vehicle, may lead to an imbalance of the wheel. To correct for this imbalance, weights made of lead or other material may be fitted at predetermined positions of the wheel and along the rim. In order to determine the exact position for such a correction weight, balancing machines are commonly used which enable measuring of the imbalance during wheel rotation. Based on the measured data a processing unit of the wheel balancing machine can determine the exact position(s) on the rim at which one or more correction weights have to be positioned. It is furthermore known in the art to provide visual interfaces to display control parameters for the balancing apparatus, the measurement results and/or the results retracted therefrom, e.g. the positions where to put the correction weights. In order to start and stop operation as well as to provide certain input parameters the wheel balancing apparatus is usually also provided with an input interface, e.g. start buttons, keyboard, touchpad, etc.

An example for such a balancing apparatus is shown in EP patent application 2 163 874, which shows a wheel balancing apparatus comprising a visual display as well as a control interface integrated in the casing of the wheel balancing apparatus (cf. Fig. 1 of EP 2 163 874). The disadvantage of this arrangement is that the user may only properly read the information displayed on the visual display when he or she is standing right in front of the machine, looking at the display preferably without inclination. However, when providing correction weights to the rim, the user will most likely have to leave the position right in front of the machine, in that case the viewing angle will no longer be optimal.

From EP patent application 2 163 873 an alternative arrangement for the visual display of a wheel balancing apparatus is known, in which a large separate display is provided on top of the machine (cf. Fig. 1 of EP 2 163 873). Wherein such a display provides a better view even from a slightly inclined viewing position to the user, equipping the machine with an extra display results in extra costs for the production, in a longer and more complicated machine assembly as well as reassembly including a more complicated transport.

US 7,069,660 B2 discloses a wheel alignment machine having an image sensing module and a host for providing a vehicle wheel alignment parameter in response to data communicated from the image sensing module. The machine uses a desktop computer having a fixed monitor, a laptop or handheld device as host.

US 2014/236416 A1 discloses a wheel alignment device including a test module, a control processor having control software, an operating device and a display device arranged on top of a vehicle testing device's housing. It teaches that a PDA or a smart phone can be used instead of the vehicle testing device.

US 2003/187556 A1 discloses a wheel measurement system comprising a wheel gauge having a measurement portion for measuring predetermined maintenance data on a wheel attached to a vehicle and the periphery thereof, a transmitter for transmitting the measurement data and a data processor having a receiver for receiving the measurement data from the wheel gauge and a data displaying portion for processing and displaying the received measurement data in a predetermined form.

It is thus an object of the present invention to overcome the disadvantages of the prior art.

### SUMMARY OF THE INVENTION

The present invention pertains to a wheel servicing apparatus comprising a machine body, as set out in the independent claim. Further embodiments are disclosed by the dependent claims.

The machine body may be the wheel servicing apparatus, in particular a wheel balancing apparatus, itself or a subcomponent thereof, for instance a weight tray, the wheel guard, etc., wherein the subcomponents may be removably attached to the wheel servicing apparatus. Whether the machine body is a removable subcomponent of the wheel servicing apparatus, which may be stored and/or be transported separately, or whether the machine body is the entire apparatus, in both cases the second position for the display support unit provides a compact design of the machine body which eases packing, stacking and transportation and provides protection for a display unit attached to the display support unit, in particular scraper protection for the display unit's front surface. Furthermore, a single display unit may be attached to several machine bodies. The display unit can be a customary tablet, smartphone or any other common or specifically produced electronic display device preferably with touchscreen functionality, provided with a suitable software to be used with the wheel servicing apparatus. Each user may use a customised tablet on one or more wheel servicing apparatuses or other machines or devices, respectively, which can be found in a maintenance shop. Furthermore, the data may also be stored at the tablet for post processing or reporting while the machine could be used by another user using his or her own tablet as user interface. Alternatively, the display unit may be permanently fixed to or integrally formed with the display support unit.

According to the present invention, the casing comprises a slot, wherein in the second position the display support unit is slidably recessed in the slot of the casing. By providing a slot at the machine body, either at a side surface or on the top or bottom surface, the display support unit may be slidably recessed into the slot in the second position such that the machine body in the second position provides a compact and smooth surface structure which eases packing and transport as well as decreases the risk of accidentally damaging the display unit when for instance changing a wheel, etc. The display support unit may either be provided in form of one or more telescope arms provided inside the slot extendable in the expansion direction. However, any other extension mechanism may be applied. The extension may either be controlled electrically or mechanically. For instance, much like the spring supported latching mechanisms commonly used for storage cards inserted in a laptop or other electronic device, a rejection from a recessed position can be achieved by further pushing the display support unit into the slot, thereby overcoming the locking mechanism wherein pre-tensioned springs may then extend the display support unit into the first position. Another example would be an electrically driven mechanism controllable via an eject/retract button. In order to fix and release the display support unit in at least one of the first or second position, the machine body and/or the display support unit may provide any suitable fixing and/or release/rejection mechanism, e.g. means for clamping, means for latching, magnetic fixing elements, etc.

In a further embodiment of the present invention, the display support unit comprises connection plugs for the display unit for connecting the display unit with the processing unit and/or a power unit. The display support unit may provide a kind of click station in which a display unit may be plugged in. Depending on the way the display unit exchanges data with the processing unit of the wheel servicing apparatus, e.g. hard wired or wireless, the display support unit may provide one or more plugs connectable with respective sockets of the display unit via which the display unit may receive power and/or data from the wheel servicing apparatus. Accordingly, the respective cables or transport channels have to be provided along the extendable display support unit structures. The display support unit may provide a frame, e.g. L-shaped or closed, into which the display unit fits in. Alternatively, the display support unit may only provide a guide rail into which the display unit can be positioned.

In an embodiment of the present invention, the display support frame only comprises power plugs or is adapted to provide only mechanical support for the display unit. In case the display unit to be attached to the display unit support frame is wirelessly connectable to the processing unit of the wheel servicing apparatus, e.g. via Bluetooth, WLAN or the like, and may run on battery like a tablet, no further plugs are required. The cables for connecting the display support unit with the wheel servicing apparatus may be reduced to a minimum, e.g. power supply only. In case the display unit runs on battery or may also be charged in a wireless fashion, for instance in an inductive manner, no cables are required to connect the display unit with the processing unit of the wheel servicing apparatus which reduces the complexity of the device resulting in lower costs regarding material and construction time. Furthermore, any movement of the display support unit is no longer restricted by the available length or play of a cable.

In a further embodiment of the present invention, the display support unit in the first position is inclinable and/or movable in an upward, downward, left or right direction. In case the user of the wheel servicing apparatus is working at a certain distance and/or with a certain inclination to the machine body, the display support unit may be flexibly positioned such that the user may look at the display front surface of the display unit attached to the display support unit without inclination.

In an embodiment of the present invention, the display support unit comprises a display support frame adaptable to a size of the display unit. The frame may have any suitable form, such as a rectangular frame, an L-shaped frame, etc. Providing a frame adaptable in size is in particular advantageous when varying display devices may be attached to the display support unit, e.g. customised tablets may vary in size. Alternatively, the display support unit may comprise a retaining ledge into which the display unit is positionable. The retaining ledge may also support different display unit sizes.

In another embodiment of the present invention, the machine body further comprises a locking mechanism to fix the display support unit in at least one of the first and second position. In order to stabilise the display support unit in either one of the first or the second position a locking mechanism is provided, which protects the display support unit from unwanted position changes, for instance during transport where the display support unit should preferably remain in the second position or during operation where unintentional movement of the display support unit can be avoided by fixing the display support unit in the first position.

In an embodiment of the present invention, the machine body further comprises control means to automatically adapt the position of the display support unit, preferably in dependence of an observed user position. During operation of the wheel servicing apparatus, the user might change his or her position for instance when providing weights to the rim. In order to maintain an optimal view onto a display unit attachable to the display support unit, it is desirable to have control means which automatically adapt the position of the display support unit. The input data required to adapt the orientation of the display support unit to the user's position may be obtained from visual data captured with the camera, either externally provided or integrated in the display unit. For instance, the display unit may provide the camera and a control program detects the user's viewing angle and adapts the position of the display support unit accordingly. Additional features known from gaze tracking applications may be used in addition to zoom, scroll or other display change operations. Alternatively or in addition, the display support unit may be controlled to engage in a specific position depending on a processing operation performed with the wheel servicing apparatus.

Alternatively or in addition, the control means could be activated via processing of verbal commands. In that case the microphone, either provided externally or integrated in the display unit may deliver the input data.

In an embodiment of the present invention the machine body further comprises an actuator unit configured to bring the display support unit into the first position upon activation of the wheel servicing apparatus and/or configured to bring the display support unit into the second position upon shut down of the wheel servicing apparatus. The actuator, for instance a servo motor may expand or retract the display support unit upon activation in order to shorten the time until the wheel servicing apparatus is ready for operation. In order to assure that the wheel servicing apparatus remains in the second position when it is not used, the servo motor may automatically bring the display support unit into the second position, thus releasing the user from the duty to assure the wheel servicing apparatus remains in the more secure second position.

In an embodiment of the present invention the machine body further comprises a display unit permanently fixed to the display support unit. Wherein the above embodiments have been described with reference to a reversibly attachable display unit, all of the above embodiments may also be provided with a display unit permanently fixed to the display support unit. Integral or fixed display units may provide the advantage of a more robust connection as well as a smaller risk of signs of wear.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

Figs. 1a-d show schematic drawings of machine bodies having a slidable display support unit.
Figs. 2a and 2b show schematic drawings of machine bodies having a foldable display support unit.
Fig. 3 shows a schematic drawing of a machine body having a display support frame provided at the end of a movable support arm.
Fig. 4a-c show schematic drawings of different display support unit structures into which a display unit may be attached.

### DETAILED DESCRIPTION

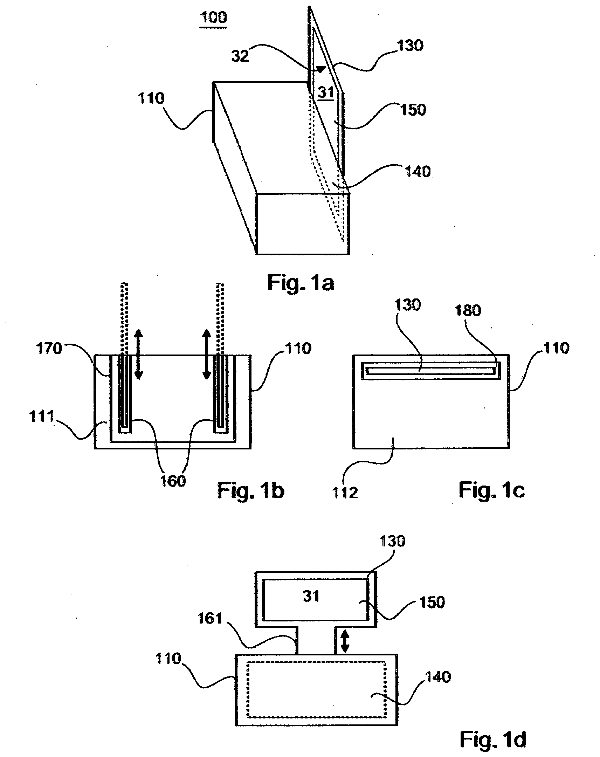

Fig. 1a shows a schematic drawing of a machine body 100. In a first position 150 of a display support unit 130, in which the display support unit 130 is in an upright position, a display unit 31 is removably attached to the display support unit 130 wherein a display front surface 32 of the display unit 31 is visible to the outside, e.g. the user. In a second position 140, the display support unit 130 is in a retracted position. The display front surface 32 of the display unit 31 is shielded from the outside such that the display front surface 32 is not visible to the user. As schematically depicted in Fig. 1b, the retracted position 140 may be achieved by sliding the display support unit 130 along vertically arranged guide rails 160 from the upright position 150 downwardly. According to a configuration not covered by the claims, the machine body 100 provides a recess portion 170, for instance on the backside 111 of the casing 110 of the machine body 100, such that in the second position 140 the machine body 100 provides a compact design substantially without protrusions or recesses at the outer surface. According to the present invention, the display support unit 130 is recessed into a slot 180 provided inside the casing of the machine body 100, for instance at the top surface 112, as schematically illustrated in Fig. 1c. Again, the display support unit 130 may be slidably moved from the first position 150 to the second position 140 and vice versa along guide rails 160 or any other suitable telescopic devise or expansion mechanism.

In Fig. 1d, the display support unit 130 is provided at a preferably central slidable arm 161. However, any other position is also feasible. Such an arrangement provides the advantage that the display support unit on top of the central slidable arm 161 may be adapted to be rotatable around the axis of the arm to provide inclinations to the left and right side. The display support unit 130 may be slidably moved from the first position 150 to the second position 140 and vice versa along guide rails or any other suitable telescopic devise or expansion mechanism.

The expansion mechanism may generally be started automatically when starting the wheel servicing apparatus and revert to the retracted position 140 upon shut down/power down of the wheel servicing apparatus, e.g. via a servo motor or any other suitable actuator.

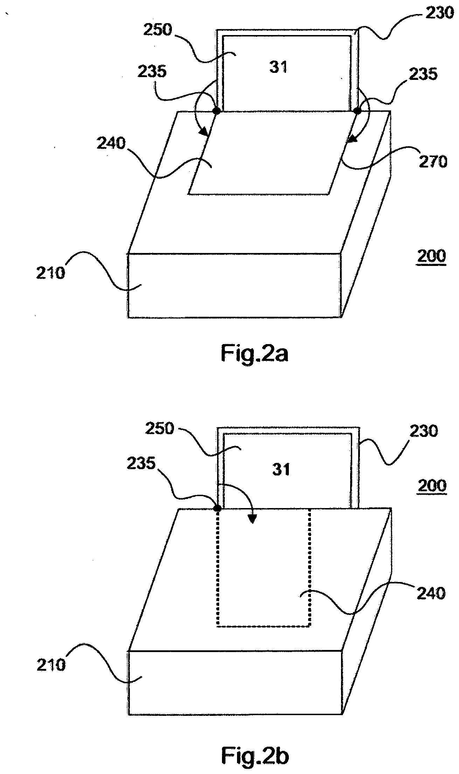

Fig. 2a shows a schematic drawing of a machine body 200, which is not covered by the claims. Only the differences with respect to Fig. 1a-d shall be described. Instead of being slidably moved from the first to the second position, the display support unit 230 may be folded from a first, for instance, an upright position 250 to a second, closed position 240. Again, the machine body 200 may optionally comprise a recess portion 290 such that the machine body 200 shows a plane surface when the display support unit 230 is folded into the second position 240. Fig. 2a shows a folding from an upright position along the axis provided by the lower edge of the rectangular display support unit 230. However, any other folding direction/axis would be feasible, depending on the position of hinges 235 provided by the display support unit 230. The person skilled in the art will furthermore appreciate that the folded position 240 and optimally the recess portion 290 may be provided at any surface position (left side, right side, front and backside, etc) of the casing 210. Instead of folding the display support unit 230 along an edge side of the display support unit 230, Fig. 2b, which is not covered by the claims either, shows that alternatively or in addition, the display support unit 230 may also be rotatably folded away, wherein the display support unit 230 is rotated by 90° around the rotation axis provided by hinge 235. The folding may be achieved by manually folding the display support unit by a user or by electrically controlling the mechanism. In the latter case, the folding mechanism may generally be started automatically when starting the wheel servicing apparatus and revert to the retracted position 240 upon shut down/power down of the wheel servicing apparatus. In order to fix the display support unit 230 in any of the first 250 or second 240 position or any position in between any suitable attachment means may be used, e.g. means for clamping, latching or magnetically fixing.

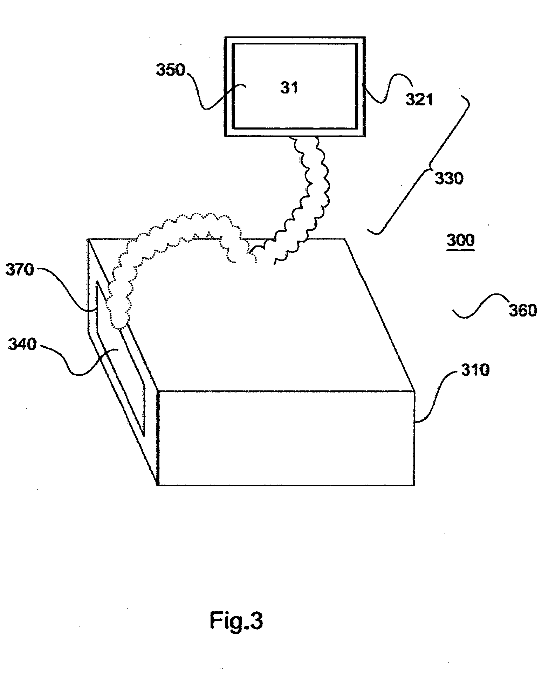

Fig. 3 shows a schematic drawing of a machine body 300. The display support unit 330 comprises an arm structure 360 which may be provided with one or more hinges and a display support frame 321 at the end. The arm allowing at least a movement from a retracted position 340, for which optionally a recess portion 390 or slot may be provided at any suitable position of the machine body 300 to an open position 250. Depending on the flexibility of the arm structure 360, the display support unit 330 may provide for any spherical orientation. Depending on the length of the arm structure 360 the display support unit 330 may be positioned in a respective area above the machine body 300 which may exceed beyond the machine body's dimensions. The arm structure 360 may be mechanically or electrically controllable/movable from one position to another.

The display unit 31 attachable to the display support unit 330 may further provide a camera and a control program which detects the users viewing angle. In case the display support unit 330 allows an inclination in first position 350, e.g. in Fig. 1d, Fig. 2b, Fig.3, the display support unit 330 may adapt the position of the display support unit 330 accordingly. In that case the display support unit 330 has to provide a communication interface between the display unit 31 and control electronics controlling the movements of the display support unit 330. Additional features known from gaze tracking applications may be used in addition to zoom, scroll or other display change operations. Alternatively or in addition, the display support unit 330 may be controlled to engage in a specific position depending on a processing operation currently performed by the wheel servicing apparatus. For instance, if respective positions for one or more correction weights have been determined by the wheel balancing machine, the display support unit may be positioned, for example by an electric motor or the like, such that a user can see the display while providing the correction weights to the rim of the wheel.

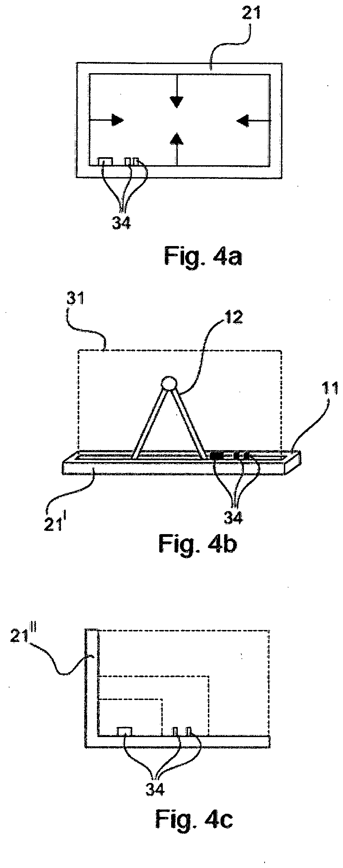

Fig. 4a-c show schematic drawings of different display unit support structures 21, 21', 21" which may be used with any of the above-mentioned machine bodies 100, 200 and 300.

Fig. 4a schematically shows a rectangular frame 21 which may have a fixed size, for instance fitted to a standard display unit size. However, more preferably the frame size is adaptable to a plurality of frame sizes in order to support different display units having different frame sizes. Furthermore, an adaptable frame structure would ease the attachment procedure of the display unit 31 to the display unit support frame 21. In order to fix the display unit 31 within the display unit support frame 21 any suitable attachment means may be used, e.g. means for clamping, latching or magnetically fixing. At one or more of the frame sides one or more plugs 34 may be provided, preferably in a recess portion 11 of bottom frame side, to provide power and/or data communication ports to the display unit 31.

In an alternative variant for the display unit support structure a retaining ledge 21' may be provided in which the display unit 31 may be inserted as schematically indicated in Fig. 4b. Optionally, the retaining ledge 21' provides one or more support arms 12, preferably in effectively orthogonal direction to the retaining ledge 21' in order to stabilise the display unit 31 which is in particular relevant in case the display unit 31 provides touchscreen functionality and thus is exposed to pressure on the display front surface 32. Wherein Fig. 4b does not provide any limitations in size for the display unit 31 in a vertical direction, the horizontal dimensions of the display unit 31 may be limited to the length of the retaining ledge 21' in case the ends of the retaining ledge 21' are closed. Otherwise, the display unit 31 may further extend in horizontal direction. Again the retaining ledge 21' may provide one or more plugs 34, preferably in a recess portion 11 of the retaining ledge 21' to provide power and/or data communication ports to the display unit 31.

A further alternative variant for the display support structure is shown in Fig. 4c which illustrates an L-frame 21" having one vertical leg and one horizontal leg to support a display unit 31. The advantage of an L-frame compared to an entire frame 21 as depicted in Fig. 4a is that the L-frame 21" naturally supports variable sized display units 31. However, with only two support legs the stability of the display unit 31 inside the L-frame 21" is decreased with respect to the rectangular frame 21 shown in Fig. 4a. As for the display support unit structure 21' depicted in Fig. 4b, optional support arms 12 may be provided for both frames structures 21 and 21" shown in Fig. 4a as well as Fig. 4c, respectively, in order to increase stability, in particular to support a touchscreen display unit when pressure is provided to the display front surface 32, e.g. when a user touches the display unit 31 to enter a control command. Again the L-frame 21" may provide one or more plugs 34, preferably in a recess portion of one of the legs to provide power and/or data communication ports to the display unit 31. In order to fix and release the display unit at the display support unit any suitable fixing and/or release/rejection mechanism may be provided, e.g. means for clamping, means for latching, magnetic fixing elements, etc.

### REFERENCE SIGNS LIST

- 100, 200, 300, 400: machine body
- 110,210,310,410: casing
- 130, 230, 330, 430: display support unit
- 150, 250, 350, 450: first position
- 140, 240, 340, 440: second position
- 11: recess portion (frame structure)
- 170, 270, 370: recess portion
- 12: support arms
- 21: rectangular frame (display unit support structures)
- 21': retaining ledge (display unit support structures)
- 21": L-frame (display unit support structures)
- 31: display unit
- 32: front surface
- 34: plugs
- 111: backside
- 112: surface
- 160: guide rails
- 161: central slideable arm
- 180: slot
- 235: hinges
- 321: display support frame
- 360: arm structure

## Claims

1. A wheel servicing apparatus having a machine body (100), the machine body comprising:
a casing (110);
a slot (180) provided inside the casing (110);
a display unit (31), in particular a touchscreen unit, having a display front surface (32) and connected with a processing unit of the wheel servicing apparatus; and
a display support unit (130), wherein the display unit (31) is attached to the display support unit (130), the display support unit (130) configured to support the display unit (31) and arranged at the casing (110) to vertically slide between
(i) a first position (150) in which the display front surface (32) is visible to a user, and
(ii) a second position (140) in which the display support unit (130) and the display unit (31) are positioned in the slot (180) to shield the display front surface (32) from the outside such that the display front surface (32) is not visible to the user.

2. The wheel servicing apparatus according to claim 1, wherein the display support unit (130) comprises connection plugs (34) for the display unit (130) for connecting the display unit with the processing unit and/or a power unit.

3. The wheel servicing apparatus according to claim 1 or 2, wherein the display support unit only comprises power plugs or is adapted to provide only mechanical support for the display unit.

4. The wheel servicing apparatus according to any of the preceding claims, wherein the display support unit (130) in the first position is inclinable in an upward, downward, left or right direction.

5. The wheel servicing apparatus according to any of the preceding claims, wherein the machine body is a weight tray removably attachable to the wheel servicing apparatus.

6. The wheel servicing apparatus according to any of the preceding claims, wherein the display support unit (330) in the first position (350) is adapted to be flexibly aligned to the user's point of view.

7. The wheel servicing apparatus according to any of the preceding claims, wherein the display support unit (130) comprises a display support frame adaptable to a size of the display unit (31).

8. The wheel servicing apparatus according to any of the preceding claims, wherein the display support unit (130) comprises a retaining ledge (21') into which the display unit (31) is positionable.

9. The wheel servicing apparatus according to any of the preceding claims, further comprising a locking mechanism to fix the display support unit (130) in at least one of the first (150) and second (140) positions.

10. The wheel servicing apparatus according to any of the preceding claims, further comprising control means configured to automatically adapt the position of the display support unit (330), preferably dependent on an observed user position.

11. The wheel servicing apparatus according to any of the preceding claims, further comprising an actuator unit configured to bring the display support unit (130) into the first position upon activation of the wheel servicing apparatus and/or configured to bring the display support unit (130) into the second position upon shut down of the wheel servicing apparatus.

12. The wheel servicing apparatus according to any of the preceding claims, wherein the display unit (31) is permanently fixed to the display support unit (130).

## Patentansprüche

1. Radwartungsvorrichtung mit einem Maschinenkörper (100), wobei der Maschinenkörper umfasst:
ein Gehäuse (110);
einen Schlitz (180), der im Inneren des Gehäuses (110) vorgesehen ist;
eine Anzeigeeinheit (31), insbesondere eine Touchscreen-Einheit, die eine Anzeigevorderseite (32) aufweist und mit einer Verarbeitungseinheit der Radwartungsvorrichtung verbunden ist; und
eine Anzeigeträgereinheit (130), wobei die Anzeigeeinheit (31) an der Anzeigeträgereinheit (130) angebracht ist, wobei die Anzeigeträgereinheit (130) dazu konfiguriert ist, die Anzeigeeinheit (31) zu stützen und an dem Gehäuse (110) angeordnet ist, um vertikal zu gleiten zwischen
(i) einer ersten Position (150), in der die Anzeigevorderseite (32) für einen Benutzer sichtbar ist, und
(ii) einer zweiten Position (140), in der die Anzeigeträgereinheit (130) und die Anzeigeeinheit (31) in dem Schlitz (180) positioniert sind, um die Anzeigevorderseite (32) von außen abzuschirmen, so dass die Anzeigevorderseite (32) für den Benutzer nicht sichtbar ist.

2. Radwartungsvorrichtung nach Anspruch 1, wobei die Anzeigeträgereinheit (130) Verbindungsstecker (34) für die Anzeigeeinheit (130) umfasst, um die Anzeigeeinheit mit der Verarbeitungseinheit und/oder einer Stromversorgungseinheit zu verbinden.

3. Radwartungsvorrichtung nach Anspruch 1 oder 2, wobei die Anzeigeträgereinheit nur Stromanschlüsse umfasst oder dazu eingerichtet ist, nur eine mechanische Unterstützung für die Anzeigeeinheit bereitzustellen.

4. Radwartungsvorrichtung nach einem der vorangehenden Ansprüche, wobei die Anzeigeträgereinheit (130) in der ersten Position nach oben, unten, links oder rechts neigbar ist.

5. Radwartungsvorrichtung nach einem der vorangehenden Ansprüche, wobei der Maschinenkörper eine Gewichteablage ist, die abnehmbar an der Radwartungsvorrichtung angebracht werden kann.

6. Radwartungsvorrichtung nach einem der vorangehenden Ansprüche, wobei die Anzeigeträgereinheit (330) in der ersten Position (350) dazu eingerichtet ist, flexibel auf den Blickwinkel des Benutzers ausgerichtet zu werden.

7. Radwartungsvorrichtung nach einem der vorangehenden Ansprüche, wobei die Anzeigeträgereinheit (130) einen Anzeigenträgerrahmen umfasst, der an eine Größe der Anzeigeeinheit (31) anpassbar ist.

8. Radwartungsvorrichtung nach einem der vorangehenden Ansprüche, wobei die Anzeigeträgereinheit (130) eine Halteleiste (21') umfasst, in der die Anzeigeeinheit (31) positionierbar ist.

9. Radwartungsvorrichtung nach einem der vorangehenden Ansprüche, die ferner einen Verriegelungsmechanismus umfasst, um die Anzeigeträgereinheit (130) in wenigstens einer von der ersten (150) und der zweiten (140) Position zu fixieren.

10. Radwartungsvorrichtung nach einem der vorangehenden Ansprüche, die ferner ein Steuerungsmittel umfasst, das dazu konfiguriert ist, die Position der Anzeigeträgereinheit (330) automatisch anzupassen, vorzugsweise in Abhängigkeit von einer beobachteten Benutzerposition.

11. Radwartungsvorrichtung nach einem der vorangehenden Ansprüche, die ferner eine Betätigungseinheit umfasst, die dazu konfiguriert ist, die Anzeigeträgereinheit (130) bei Aktivierung der Radwartungsvorrichtung in die erste Position zu bringen, und/oder die dazu konfiguriert ist, die Anzeigeträgereinheit (130) bei Abschaltung der Radwartungsvorrichtung in die zweite Position zu bringen.

12. Radwartungsvorrichtung nach einem der vorangehenden Ansprüche, wobei die Anzeigeeinheit (31) dauerhaft an der Anzeigeträgereinheit (130) befestigt ist.

## Revendications

1. Appareil d'entretien de roue présentant un corps de machine (100), le corps de machine comprenant :
un boîtier (110) ;
une fente (180) disposée à l'intérieur du boîtier (110) ;
une unité d'affichage (31), en particulier une unité d'écran tactile, présentant une surface avant d'affichage (32) et connectée à une unité de traitement de l'appareil d'entretien de roue ; et
une unité de support d'affichage (130), l'unité d'affichage (31) étant fixée à l'unité de support d'affichage (130), l'unité de support d'affichage (130) étant conçue pour supporter l'unité d'affichage (31) et agencée au niveau du boîtier (110) pour coulisser verticalement entre
(i) une première position (150) dans laquelle la surface avant d'affichage (32) est visible pour un utilisateur et
(ii) une seconde position (140) dans laquelle l'unité de support d'affichage (130) et l'unité d'affichage (31) sont positionnées dans la fente (180) pour protéger la surface avant d'affichage (32) par rapport à l'extérieur de telle sorte que la surface avant d'affichage (32) n'est pas visible pour l'utilisateur.

2. Appareil d'entretien de roue selon la revendication 1, l'unité de support d'affichage (130) comprenant des fiches de connexion (34) pour l'unité d'affichage (130) afin de connecter l'unité d'affichage à l'unité de traitement et/ou à une unité d'alimentation.

3. Appareil d'entretien de roue selon la revendication 1 ou 2, l'unité de support d'affichage comprenant uniquement des fiches d'alimentation ou étant conçue pour fournir uniquement un support mécanique à l'unité d'affichage.

4. Appareil d'entretien de roue selon l'une quelconque des revendications précédentes, l'unité de support d'affichage (130) dans la première position étant inclinable dans un sens vers le haut, vers le bas, vers la gauche ou vers la droite.

5. Appareil d'entretien de roue selon l'une quelconque des revendications précédentes, le corps de machine étant un porte poids pouvant être fixé de manière amovible à l'appareil d'entretien de roue.

6. Appareil d'entretien de roue selon l'une quelconque des revendications précédentes, l'unité de support d'affichage (330) dans la première position (350) étant conçue pour être alignée de manière flexible sur le regard de l'utilisateur.

7. Appareil d'entretien de roue selon l'une quelconque des revendications précédentes, l'unité de support d'affichage (130) comprenant un cadre support d'affichage adaptable à une dimension de l'unité d'affichage (31).

8. Appareil d'entretien de roue selon l'une quelconque des revendications précédentes, l'unité de support d'affichage (130) comprenant un rebord de retenue (21') dans lequel l'unité d'affichage (31) peut être positionnée.

9. Appareil d'entretien de roue selon l'une quelconque des revendications précédentes, comprenant en outre un mécanisme de verrouillage pour fixer l'unité de support d'affichage (130) dans au moins l'une parmi la première (150) et la seconde (140) position.

10. Appareil d'entretien de roue selon l'une quelconque des revendications précédentes, comprenant en outre des moyens de commande conçus pour adapter automatiquement la position de l'unité de support d'affichage (330), de préférence en fonction d'une position d'utilisateur observée.

11. Appareil d'entretien de roue selon l'une quelconque des revendications précédentes, comprenant en outre une unité d'actionneur conçue pour amener l'unité de support d'affichage (130) dans la première position lors de l'activation de l'appareil d'entretien de roue et/ou conçue pour amener l'unité de support d'affichage (130) dans la seconde position lors de l'arrêt de l'appareil d'entretien de roue.

12. Appareil d'entretien de roue selon l'une quelconque des revendications précédentes, l'unité d'affichage (31) étant fixée de manière permanente à l'unité de support d'affichage (130).
